# EUROPÄISCHE PATENTSCHRIFT

(11) **EP 0 978 418 B1**
(45) Veröffentlichungstag und Bekanntmachung des Hinweises auf die Patenterteilung: **04.06.2003**
(21) Anmeldenummer: 99112921.4
(22) Anmeldetag: 05.07.1999
(51) Int. Cl.: B60R 7/06

(54) **Vorrichtung zum Einbau in einen Kraftwagen mit einem Ausziehteil**
Mounting device in a vehicle with an extensible element
Dispositif de montage dans un véhicule avec un élément extensible

(30) Priorität: 05.08.1998 DE 19835364
(43) Veröffentlichungstag der Anmeldung: 09.02.2000
(73) Patentinhaber: fischerwerke Artur Fischer GmbH & Co. KG, 72178 Waldachtal (DE); Bayerische Motoren Werke Aktiengesellschaft, 80788 München (DE)
(72) Erfinder: Widulle, Rüdiger, 81547 München (DE); Schmidt, Michael, 72218 Wildberg (DE); Plocher, Bernd, 72108 Rottenburg-Seebronn (DE)

(56) Entgegenhaltungen:
- EP-A- 0 525 811
- EP-A- 0 561 278
- EP-A- 0 561 332
- EP-A- 0 610 882
- DE-A- 4 130 847
- DE-A- 19 756 908
- US-A- 4 552 399
- US-A- 5 052 728

## Beschreibung

Die Erfindung betrifft eine Vorrichtung zum Einbau in einen Kraftwagen, mit einem Ausziehteil, gemäß dem Oberbegriff des Anspruchs 1.

Ein derartiges Ausziehteil kann beispielsweise ein Ablagefach sein, das nach Art einer Schublade durch Herausziehen aus einer Grundstellung in eine Gebrauchsstellung bewegbar ist. In der Grundstellung schließt das Ausziehteil im wesentlichen bündig mit beispielsweise einem Armaturenbrett des Kraftwagens ab, in der Gebrauchsstellung ragt das Ausziehteil in einen Fahrgastraum. Es kann beispielsweise auch eine Schwenk- oder sonstige Führung vorgesehen sein, um das Ausziehteil aus der Grund- in die Gebrauchsstellung bewegen zu können. Das Ausziehteil kann beispielsweise auch ein Halter für einen Getränkebehälter wie eine Getränkedose, einen Getränkebecher oder dgl. sein.

Bei einem Unfall des Kraftwagens können Beschleunigungen auf das Ausziehteil wirken, die dieses selbsttätig und unerwünscht aus der Grund- in die Gebrauchsstellung bewegen. Da das Ausziehteil in der Gebrauchsstellung in den Fahrgastraum vorsteht, besteht eine erhöhte Verletzungsgefahr.

Aus der EP-A-0 525 811 ist eine gattungsgemässe Vorrichtung mit einer nach unten schwenkbaren Klappe verschließbares Ablagefach bekannt, das zur Anordnung an einer Decke eines Kraftwagens vorgesehen ist. Die Klappe bildet einen Boden des Ablagefachs. Die Klappe wird durch eine sog. Push-Push-Verriegelungseinrichtung geschlossen gehalten, die durch Drücken der Klappe nach oben in das Ablagefach hinein entriegelbar ist. Um bei einem Unfall ein unerwünschtes und selbsttätiges Öffnen der Klappe zu vermeiden weist das bekannte Ablagefach eine Sicherheitsverriegelungseinrichtung mit einem schwenkbar gelagerten Riegel auf, der an seinem freien Ende einen abgewinkelten Fuß aufweist. Bei einem Auffahrunfall schwenkt der Riegel mit seinem Fuß gegen die Kraft eines Rückstellfederelements in eine Aussparung der Klappe hinein und verhindert dadurch, dass sich die Klappe in das Ablagefach hineinbewegen und dadurch die Push-Push-Verriegelungseinrichtung entriegeln kann. Unter ungünstigen Umständen kann es jedoch dazu kommen, dass sich die Klappe des Ablagefachs bei einem Unfall in das Ablagefach hineinbewegt bevor der Riegel der Sicherheitsverriegelungseinrichtung dies verhindert. In diesem Fall ist die Klappe entriegelt und öffnet sich.

Aus der US-A-5 052 728 ist ein Halter für Getränkebehälter bekannt, der zum Einbau in einen Kraftwagen vorgesehen ist. Der Halter weist einen schubladenartig ausziehbaren Schieber auf, der mit einer Push-Push-Verriegelungseinrichtung in einer geschlossenen, eingeschobenen Stellung gehalten wird. Um ein Öffnen des Schiebers bei einem Unfall zu verhindern, weist der bekannte Halter eine in Einschubrichtung des Schiebers verschiebbare Masse auf, die durch Trägheitskräfte bei einem Unfall gegen die Kraft eines Rückstellfederelements so verschoben wird, dass sie die Push-Push-Verriegelungseinrichtung blockiert, so dass letztere nicht entriegeln kann. Auch bei diesem bekannten Halter kann es unter ungünstigen Umständen dazu kommen, dass die Push-Push-Verriegelungseinrichtung bei einem Unfall entriegelt bevor sie von der Masse blockiert wird.

Der Erfindung liegt die Aufgabe zugrunde, ein Ausziehteil in einem Kraftwagen im Falle eines Unfalls gegen selbsttätiges Öffnen zu sichern, wobei mit Öffnen das Verbringen aus der Grundstellung in die Gebrauchsstellung gemeint ist.

Diese Aufgabe wird durch die Merkmale des Anspruchs 1 gelöst. Die Vorrichtung weist eine Sicherheitsverriegelung mit einem Riegel auf. Aufgrund der Massenträgheit gelangt der Riegel bei einem Auffahrunfall, einem Aufprall des Kraftwagens auf ein Hindernis und dgl. in Eingriff mit dem in der Grundstellung befindlichen Ausziehteil und verriegelt dieses. Der Riegel gelangt also durch eine Beschleunigung, insbesondere eine negative Beschleunigung (Verzögerung) des Kraftwagens in den das Ausziehteil in der Grundstellung verriegelnden Eingriff. Dies hat den Vorteil, dass sich das Ausziehteil bei einem Unfall nicht öffnet, also nicht aus der Grund- in die Gebrauchsstellung bewegt, die Verletzungsgefahr wird dadurch verringert.

Der Riegel der Sicherheitsverriegelung ist um einen begrenzten Schwenkwinkel um eine Schwenkachse schwenkbar im Kraftwagen angebracht. Die Eingriffstelle des Riegels, mit der der Riegel bei einem Unfall in Eingriff mit dem in der Grundstellung befindlichen Ausziehteil gelangt, weist Abstand von der Schwenkachse auf. Ein Massenmitteipunkt des Riegels befindet sich zwischen der Schwenkachse und der Eingriffstelle des Riegels. Bei einem Unfall bewegen sich aufgrund der auf den Kraftwagen einwirkenden Beschleunigung sowohl das Ausziehteil als auch der Riegel relativ zum Kraftwagen. Dabei kann angenommen werden, dass sich das Ausziehteil und der Massenmittelpunkt des Riegels mit zumindest näherungsweise derselben Geschwindigkeit relativ zum Kraftwagen bewegen. Da die Eingriffstelle des Riegels einen größeren Abstand von dessen Schwenkachse als der Massenmittelpunkt des Riegels hat, bewegt sich die Eingriffstelle mit größerer Geschwindigkeit als das Ausziehteil relativ zum Kraftwagen. Durch diese größere Geschwindigkeit der Eingriffstelle des Riegels gegenüber dem Ausziehteil wird gelangt und dieses verriegelt, das Ausziehteil bewegt sich dabei fast nicht aus seiner Grundstellung.

Erfindungsgemäß weist der Riegel eine vergrößerte Masse im Bereich seines Massenmittelpunktes auf. Die vergrößerte Masse kann beispielsweise durch einen vergrößerten Querschnitt des Riegels im Bereich des Massenmittelpunktes gebildet sein. Insbesondere kann auch ein Gewicht mit einem den Riegel bildenden Kunststoff umspritzt sein. Die Lage des Massenmittelpunktes des Riegels lässt sich durch die Wahl des Ortes am Riegel, an dem die vergrößerte Masse angeordnet ist, festlegen. Durch die Anordnung der vergrößerten Masse am Riegel und durch eine große Masse, insbesondere durch Verwendung eines Gewichts, lässt sich gezielt eine erheblich höhere Geschwindigkeit der Eingriffstelle des Riegels gegenüber einer Geschwindigkeit des Ausziehteils erreichen. Dadurch lässt sich mit hoher Sicherheit vermeiden, dass sich das Ausziehteil bei einem Unfall soweit bewegt, dass der Riegel nicht mehr mit ihm in Eingriff gelangt und dass das Ausziehteil sich entriegelt bevor der Riegel der Sicherheitsverriegelungseinrichtung dies verhindert. Die Sicherheit der erfindungsgemäßen Vorrichtung gegen ein selbsttätiges und unerwünschtes Öffnen bei einem Unfall ist erhöht.

Die Erfindung ist insbesondere für eine Schublade oder dgl. Ablage vorgesehen, in die Gegenstände einlegbar sind. Hier ist es besonders wichtig, dass die Schublade bei einem Unfall in ihrer geschlossenen Grundstellung verbleibt, damit eingelegte Gegenstände nicht herausfliegen und die Fahrgäste verletzen können.

Insbesondere ist die erfindungsgemäße Vorrichtung für ein Ausziehteil vorgesehen, das mit einer an sich bekannten Push-Push-Verriegelungseinrichtung in seiner Grundstellung verriegelt ist und nach Entriegelung von einem Öffnungsfederelement in die Gebrauchsstellung bewegt wird. Die auch Herzkurvenmechanik genannte Push-Push-Verriegelungseinrichtung wird durch einen Druck auf eine Frontseite des Ausziehteils entriegelt, der das Ausziehteil um einen kurzen Weg in das Armaturenbrett oder dgl. des Kraftwagens hineindrückt. Die erfindungsgemäße Vorrichtung verhindert, daß sich die Push-Push-Verriegelungseinrichtung aufgrund der bei einem Unfall auftretenden Beschleunigungen selbsttätig entriegeln kann, indem sie das Ausziehteil stoppt, bevor sich die Push-Push-Verriegelungseinrichtung entriegelt. Auch kann die erfindungsgemäße Vorrichtung die Push-Push-Verriegelungseinrichtung bei einem Unfall des Kraftwagens blockieren, so daß sich die Push-Push-Verriegelungseinrichtung nicht entriegeln kann. Als weiteres kommt in Betracht, daß die erfindungsgemäße Vorrichtung bei einem Unfall des Kraftwagens das Ausziehteil in seiner Grundstellung verriegelt, unabhängig davon, ob die Push-Push-Verriegelungseinrichtung ver- oder entriegelt ist.

Die Erfindung wird nachfolgend anhand eines in der Zeichnung dargestellten Ausführungsbeispiels näher erläutert. Es zeigen:
- Figur 1: eine erfindungsgemäße Vorrichtung in einer Grundstellung in Seitenansicht;
- Figur 2: die Vorrichtung aus Figur 1 in einer Gebrauchsstellung;
- Figur 3: die Vorrichtung aus Figur 1 in der Gebrauchsstellung in perspektivischer Darstellung;
- Figur 4: ein Gehäuse der Vorrichtung aus Figur 1 in perspektivischer Darstellung; und
- Figur 5: eine Draufsicht auf einen Boden des Gehäuses der Vorrichtung aus Figur 1.

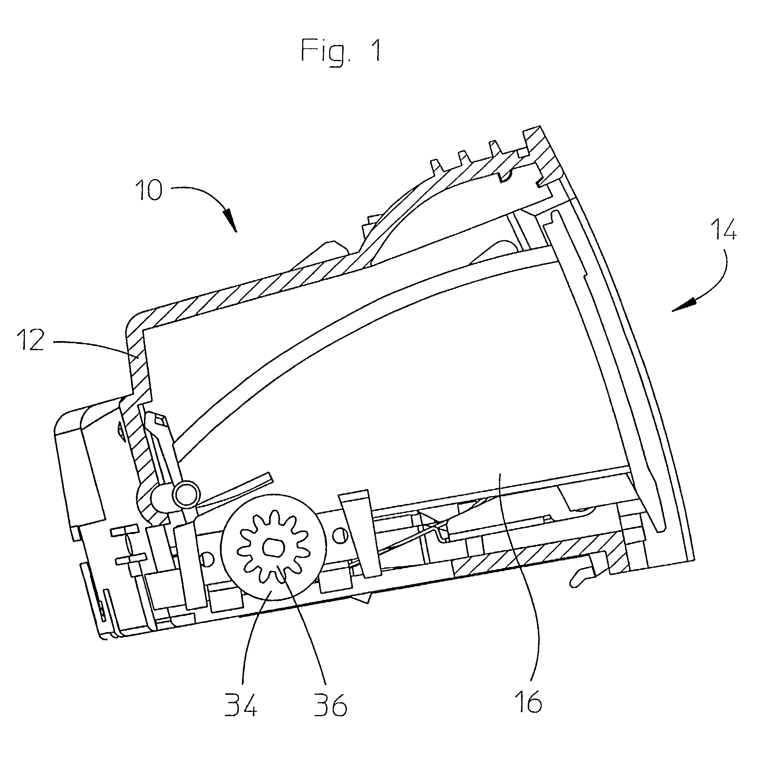

Die in Figuren 1 bis 3 dargestellte, erfindungsgemäße Vorrichtung 10 weist ein kastenförmiges Gehäuse 12 mit offener Frontseite 14 auf. Die Vorrichtung 10 ist zum Einbau beispielsweise in ein nicht dargestelltes Armaturenbrett eines Kraftwagens vorgesehen. Das Gehäuse 12 wird versenkt und mit dem Armaturenbrett bündiger Frontseite 14 eingebaut. Im Gehäuse 12 ist ein nachfolgend als Schublade 16 bezeichnetes Ablagefach aufgenommen.

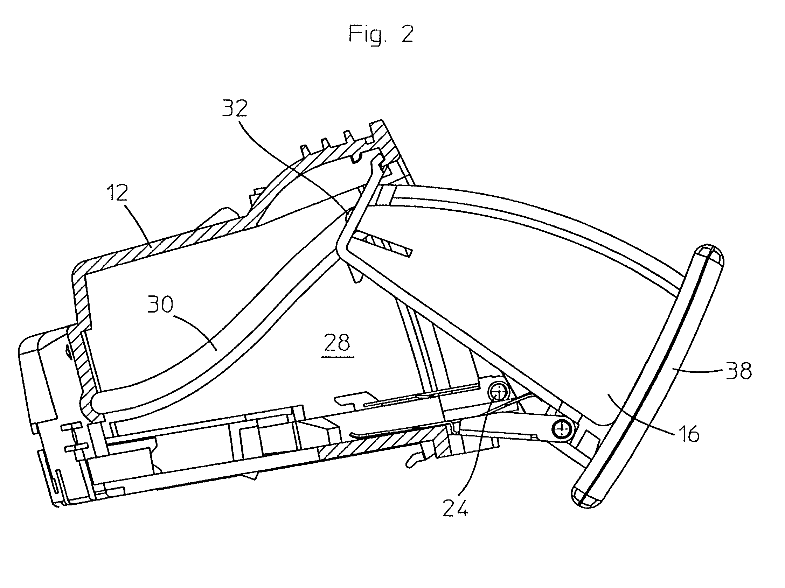

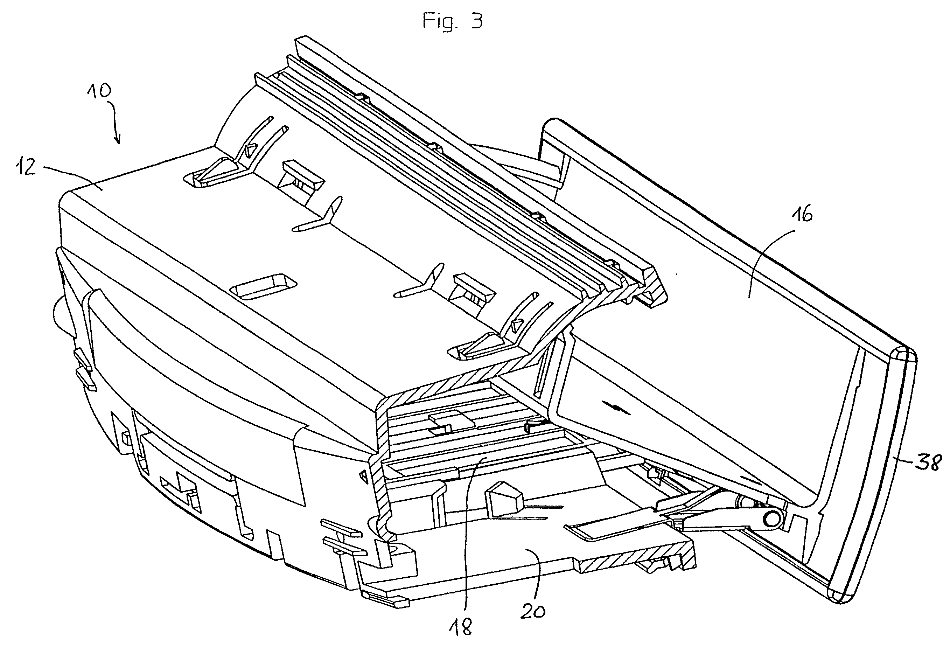

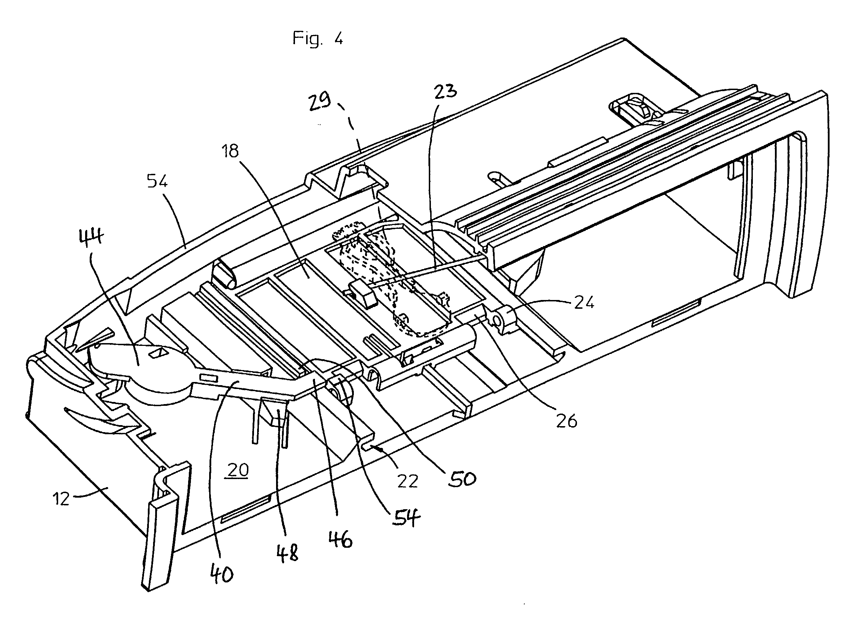

Die Vorrichtung 10 weist eine Führung auf, mit der die Schublade 16 aus einer in Figur 1 dargestellten, in das Gehäuse 12 eingeschobenen Grundstellung in eine in Figuren 2 und 3 dargestellte Gebrauchsstellung verschiebbar ist, in der die Schublade 16 aus dem Gehäuse 12 vorsteht. Die Führung der Schublade 16 weist einen plattenförmigen Schieber 18 auf einem Boden 20 des Gehäuses 12 auf (Figur 4). Der Schieber 18 greift seitlich in Nuten 22 des Gehäusebodens 20 ein und ist dadurch verschieblich auf dem Gehäuseboden 20 geführt. Mittels einer Zapfenverbindung 24 (Figur 2) ist die Schublade 16 schwenkbar an einem vorderen Rand 26 des Schiebers 18 angebracht. An seinen Seitenwänden 28 weist das Gehäuse 12 Kulissenbahnen 30 auf, in die Kulissenzapfen 32 eingreifen, die seitlich an einer Rückseite von der Schublade 16 abstehen. Die Kulissenführung mit den Kulissenbahnen 30 und den Kulissenzapfen 32 bewirkt, daß ein vorderes Ende der Schublade 16 beim Ausziehen in die Gebrauchsstellung nach unten schwenkt, so daß die Schublade 16 in der Gebrauchsstellung eine nach unten geneigte Lage einnimmt, in der ihr Innenraum gut zugänglich ist.

Die Verschiebung der Schublade 16 in die Gebrauchsstellung erfolgt durch ein Öffnungsfederelement. Das Öffnungsfederelement ist im dargestellten Ausführungsbeispiel eine Schenkelfeder 23, die am Boden 20 des Gehäuses 12 angebracht ist und die Schublade 16 an deren Schieber 18 in die Gebrauchsstellung drückt. Das Schließen der Schublade, also das Verschieben in die Grundstellung in das Gehäuse 12 hinein, erfolgt gegen die Federkraft der Schenkelfeder 23. Die Verschiebebewegung der Schublade 16 wird von einem an sich bekannten Rotationsdämpfungselement 34 gedämpft, das seitlich im hinteren Bereich an der Schublade 16 angebracht ist. Ein Zahnrad 36 des Rotationsdämpfungselements 34 kämmt mit einer in der Zeichnung nicht dargestellten Zahnstange an einer Innenseite einer Seitenwand 28 des Gehäuses 12.

In der Grundstellung ist die Schublade 16 mit einer an sich bekannten Push-Push-Verriegelungseinrichtung (Herzkurvenmechanik) 29 verriegelt, die an der Unterseite des Schiebers 18 angeordnet ist. Die Push-Push-Verriegelungseinrichtung 29 wird durch Druck gegen eine Frontblende 38 der Schublade 16 entriegelt, also durch ein Drücken der Schublade 16 ein kurzes Stück über die Grundstellung hinweg in das Gehäuse 12 hinein. Nach der Entriegelung der Push-Push-Verriegelungseinrichtung 29 öffnet die Schenkelfeder 23 die Schublade 16, d. h. die Schenkelfeder 23 verschiebt die Schublade 16 in die Gebrauchsstellung.

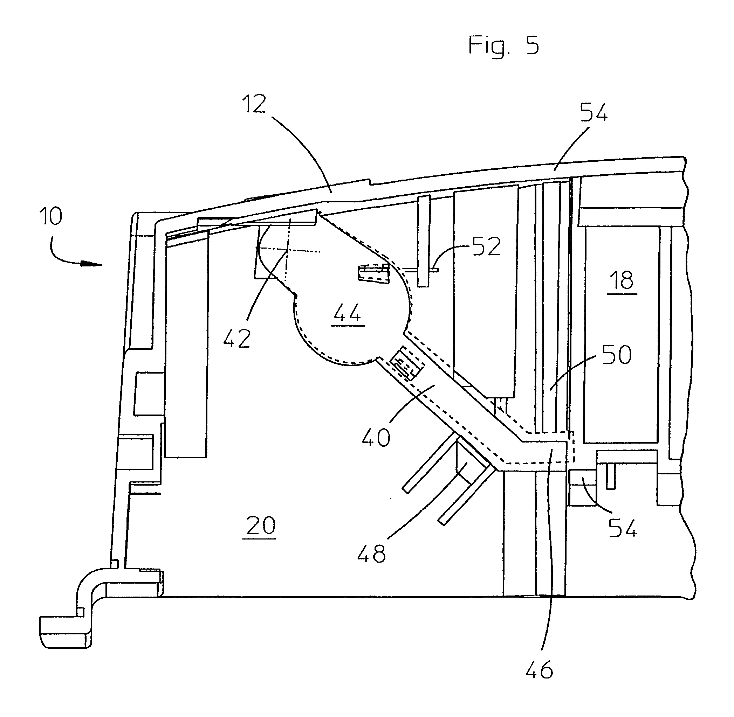

Die Vorrichtung 10 weist eine Sicherheitsverriegelungseinrichtung auf, die die Schublade 16 bei einem Unfall des Kraftwagens in der Grundstellung verriegelt. Die Sicherheitsverriegelungseinrichtung ist in Figuren 4 und 5 dargestellt. Die Schublade 16 ist der klaren Darstellung der Sicherheitsverriegelungseinrichtung wegen in diesen beiden Figuren nicht gezeichnet.

Die Sicherheitsverriegelungseinrichtung weist einen Riegel 40 in Form eines gestreckten, an einem Ende gekröpften Hebels auf. Der Riegel 40 ist schräg unter einem Winkel von ca. 45° zur Schieberichtung der Schublade 16 und seitlich vom Schieber 18 auf dem Gehäuseboden 20 angeordnet. An seinem dem Schieber 18 fernen Ende weist der Riegel 40 einen in der Zeichnung nicht sichtbaren Schwenkzapfen auf, der in ein Zapfenloch am Gehäuseboden 20 eingreift. Der Riegel 40 ist dadurch um eine Schwenkachse 42 schwenkbar auf den Gehäuseboden 20 gelagert.

Mit kurzem Abstand von der Schwenkachse 42 weist der Riegel 40 ein Gewicht 44 auf, das mit einem den Riegel 40 bildenden Kunststoff umspritzt ist. Im Bereich des Gewichts 44 befindet sich ein Massenmittelpunkt des Riegels 40. Auf einer der Schwenkachse 42 abgewandten Seite des Gewichts 44 erstreckt sich der Riegel 40 bis an eine Seite des Schiebers 18. Das der Schwenkachse 42 ferne Ende des Riegels 40 bildet eine Eingriffstelle 46. Der Abstand der Eingriffstelle 46 von der Schwenkachse 42 ist wesentlich größer als der Abstand des Gewichts 44 von der Schwenkachse 42. Der Schwenkwinkel des Riegels 40 ist begrenzt, er läßt sich zwischen einem Grundanschlag 48 und einem Endanschlag 50, die beide auf dem Gehäuseboden 20 angeordnet sind, hin- und herschwenken. Eine Schenkelfeder 52 drückt den Riegel 40 gegen den Grundanschlag 48, diese Stellung des Riegels 40 ist in Figur 4 und Figur 5 mit durchgezogenen Linien dargestellt. Die am Endanschlag 50 anliegende Stellung des Riegels 40 ist in Figur 5 mit Strichlinien angedeutet. In der am Grundanschlag 48 anliegenden Stellung befindet sich der Riegel 40 mit seiner Eingriffstelle 46 außerhalb der Bahn des Schiebers 18 der Schublade 16. Liegt der Riegel 40 am Endanschlag 50 an, ragt seine Eingriffstelle 46 in die Bahn einer vom Schieber 18 nach oben abstehenden Nase 54, so daß der Schieber 18 nur ein kurzes Stück über die Grundstellung hinweg in das Gehäuse 12 verschiebbar ist. Dieser Verschiebeweg ist so kurz bemessen, daß er eine Entriegelung der Push-Push-Verriegelungseinrichtung 29 der Schublade 16 verhindert.

Die Funktion der Sicherheitsverriegelungseinrichtung der erfindungsgemäßen Vorrichtung 10 ist folgende: Im Falle beispielsweise eines Auffahrunfalles oder des Aufpralls auf ein Hindernis wirkt eine hohe Beschleunigung (Verzögerung) auf den nicht dargestellte Kraftwagen. Diese den Kraftwagen stark verzögernden Beschleunigung bewirkt, daß sich der Riegel 40 und die Schublade 16 mit ihrem Schieber 18 relativ zum Kraftwagen und damit zum Gehäuse 12 der Vorrichtung 10 bewegen. Die Bewegung des Riegels 40 und der Schublade 16 mit dem Schieber 18 verläuft in Richtung einer Rückwand 54 des Gehäuses 12, in Figur 5 also nach oben. Der Riegel 40 gelangt dadurch in die in Figur 5 mit Strichlinien angedeutete Stellung, in der er am Endanschlag 50 anliegt. Die Eingriffstelle 46 des Riegels 40 ragt in die Bahn der Nase 54 des Schiebers 18 und blockiert dadurch die Bewegung des Schiebers 18 in das Gehäuse 12 hinein, bevor diese Bewegung die Push-Push-Verriegelungseinrichtung 29 der Schublade 16 entriegelt. Die Schublade 16 bleibt dadurch in ihrer in das Gehäuse 12 eingeschobenen Grundstellung verriegelt, so daß in die Schublade 16 eingelegte Gegenstände nicht herausfallen können. Das Gewicht 44 des Riegels 40 bewegt sich bei einem Unfall in etwa mit derselben Geschwindigkeit wie die Schublade 16 mit ihrem Schieber 18. Die Eingriffstelle 46 des Riegels 40 bewegt sich mit wesentlich höherer Geschwindigkeit als das Gewicht 44, da ihr Abstand von der Schwenkachse 42 größer ist. Die Geschwindigkeit, mit der sich die Eingriffstelle 46 bei einem Unfall bewegt, ist also wesentlich größer als die Geschwindigkeit des Schiebers 18. Dadurch ist sichergestellt, daß die Eingriffstelle 46 bei einem Unfall in die Bahn der Nase 54 des Schiebers 18 ragt, bevor die Nase 54 die Eingriffstelle 46 des Riegels 40 überfährt. Dadurch ist sichergestellt, daß die Eingriffstelle 46 den Schieber 18 bei einem Unfall so früh blockiert, daß die Push-Push-Verriegelungseinrichtung 29 der Schublade 16 nicht entriegelt wird.

Die Federkraft der Schenkelfeder 52 des Riegels 40 ist so gewählt, daß sie den Riegel 40 bei den beim normalen Fahrbetrieb und auch bei scharfem Bremsen auftretenden Beschleunigungen gegen den Grundanschlag 48 gedrückt hält, so daß die Schublade 16 beim normalen Fahrbetrieb jederzeit geöffnet werden kann und der Riegel 40 keine Klappergeräusche erzeugt. Des weiteren ist die Schenkelfeder 52 so schwach ausgebildet, daß sich aufgrund der bei einem Unfall auftretenden Beschleunigungen, die erheblich größer als die beim normalen Fahrbetrieb auftretenden Beschleunigungen sind, die Eingriffstelle 46 schneller relativ zum Gehäuse 12 bewegt als die Schublade 16 mit ihrem Schieber 18.

## Patentansprüche

1. Vorrichtung zum Einbau in einen Kraftwagen, mit einem Ausziehteil (16), das mit einer Führung aus einer Grundstellung in eine Gebrauchsstellung und umgekehrt bewegbar geführt ist, wobei die Vorrichtung (10) eine Sicherheitsverriegelungseinrichtung mit einem beweglichen Riegel (40) aufweist, der durch eine Beschleunigung in einen das Ausziehteil (16) in der Grundstellung verriegelnden Eingriff mit dem Ausziehteil (16) bringbar ist, wobei der Riegel mit einem Schwenkgelenk um einen begrenzten Schwenkwinkel schwenkbar ist und wobei eine Eingriffstelle (46) des Riegels (40), die einen Abstand von einer Schwenkachse (42) des Riegels (40) aufweist, in einen das Ausziehteil (16) in der Grundstellung verriegelnden Eingriff mit dem Ausziehteil (16) bringbar ist, und wobei ein Massenmittelpunkt des Riegels (40) sich zwischen der Schwenkachse (42) und der Eingriffstelle (46) des Riegels (40) befindet, **dadurch gekennzeichnet, dass** der Riegel (40) eine vergrößerte Masse (44) im Bereich seines Massenmittelpunktes aufweist.

2. Vorrichtung nach Anspruch 1, **dadurch gekennzeichnet, dass** das Ausziehteil eine Schublade (16) ist.

3. Vorrichtung nach Anspruch 1, **dadurch gekennzeichnet, dass** das Ausziehteil (16) mit einer entriegelbaren Push-Push-Verriegelungseinrichtung in der Grundstellung verriegelt ist und von einem Öffnungsfederelement in die Gebrauchsstellung bewegt wird.

## Claims

1. A device for installation in a motor vehicle, the device having a pop-out part that is movably guided by means of a guide means from an initial position into a usage position and *vice versa,* the device (10) comprising a safety locking device having a movable latch (40) which is arranged to be brought by an acceleration into an engagement with the pop-out part (16) locking the pop-out part (16) in the initial position, the latch being pivotable by means of a pivot articulation through a limited pivoting angle and a contact point (46) of the latch (40) that is spaced from a pivot axis (42) of the latch (40) being arranged to be brought into an engagement with the pop-out part (16) locking the pop-out part (16) in the initial position, and the centre of mass of the latch (40) being located between the pivot axis (42) and the contact point (46) of the latch (40), **characterized in that** the latch (40) has an increased mass (44) in the region of its centre of mass.

2. A device according to claim 1, **characterized in that** the pop-out part is a drawer (16).

3. A device according to claim 1, **characterized in that** the pop-out part (16) is locked by means of a releasable push-push locking device in the initial position and is moved by an opening spring element into the usage position.

## Revendications

1. Dispositif à installer dans un véhicule, avec une partie extractible (16), qui est guidée de manière déplaçable, par une glissière de guidage, d'une position initiale dans une position d'utilisation et inversement, le dispositif (10) comprenant un dispositif de verrouillage de sécurité avec un pêne déplaçable (40), qui, par une accélération, peut être mis en prise avec la partie extractible (16) pour le verrouillage de la partie extractible (16) dans la position initiale, le pêne pouvant pivoter avec une articulation de pivotement autour d'un angle de pivotement limité et un emplacement de prise (46) du pêne (40), qui présente une distance par rapport à un axe de pivotement (42) du pêne (40), pouvant être mis en prise avec la partie extractible (16) pour le verrouillage de la partie extractible (16) dans la position initiale, et un centre de masse du pêne (40) se trouvant entre l'axe de pivotement (42) et l'emplacement de prise (46) du pêne (40), **caractérisé en ce que** le pêne (40) présente une masse augmentée (44) dans la zone de son centre de masse.

2. Dispositif selon la revendication 1, **caractérisé en ce que** la partie extractible est un tiroir (16).

3. Dispositif selon la revendication 1, **caractérisé en ce que** la partie extractible (16) est verrouillée par un dispositif de verrouillage push-push déverrouillable dans la position initiale et déplacée dans la position d'utilisation par un élément à ressort d'ouverture.
